# EUROPEAN PATENT APPLICATION

(11) **EP 4 692 902 A1**
(43) Date of publication of application: **11.02.2026**
(21) Application number: 24795557.8
(22) Date of filing: 22.02.2024
(51) Int. Cl.: G02B 30/26, G02B 27/01, G03B 21/14

(54) **PROJECTION LENS, IMAGE GENERATION APPARATUS, DISPLAY DEVICE, AND MEANS OF TRANSPORTATION**

(30) Priority: 28.04.2023 CN 202310488160
(71) Applicant: Shenzhen Yinwang Intelligent Technologies Co., Ltd., Shenzhen, Guangdong 518110 (CN)
(72) Inventor: WANG, Jinlei, Shenzhen, Guangdong 518129 (CN); ZOU, Bing, Shenzhen, Guangdong 518129 (CN); CHANG, Tianhai, Shenzhen, Guangdong 518129 (CN)
(74) Representative: Gill Jennings & Every LLP
(86) International application number: PCT/CN2024/078175
(87) International publication number: WO 2024/222169

(57) **Abstract**

A projection lens (5), an image generation apparatus (1), a display device (100), and a transportation means (200) are provided, and relate to the field of light display technologies, to improve stereoscopic displaying effect. The projection lens (5) includes a first imaging lens (51), a light adjustment apparatus (53), and a second imaging lens (52). The first imaging lens (51) is configured to: receive imaging light (P1), and perform imaging on the imaging light (P1) on a side that is of the light adjustment apparatus (53) and that is close to the first imaging lens (51), to form a relay image plane (50). The imaging light (P1) includes first imaging sub-light (P11) and second imaging sub-light (P12), and the first imaging sub-light (P11) and the second imaging sub-light (P12) are respectively used to form a left-eye image and a right-eye image for implementing stereoscopic displaying. The light adjustment apparatus (53) is configured to split the imaging light (P1) on the relay image plane (50). after split, the first imaging sub-light (P11) and the second imaging sub-light (P12) in the imaging light (P1) are projected onto the second imaging lens (52) in different directions. The second imaging lens (52) is configured to project the first imaging sub-light (P11) and the second imaging sub-light (P12). The projection lens (5) may be used in the image generation apparatus (1), the display device (100), and the transportation means (200).

## Description

This application claims priority to Chinese Patent Application No. 202310488160.4, filed with the China National Intellectual Property Administration on April 28, 2023 and entitled "PROJECTION LENS, IMAGE GENERATION APPARATUS, DISPLAY DEVICE, AND TRANSPORTATION MEANS", which is incorporated herein by reference in its entirety.

### TECHNICAL FIELD

This application relates to the field of light display technologies, and in particular, to a projection lens, an image generation apparatus, a display device, and a transportation means.

### BACKGROUND

A head-up display (head-up display, HUD) apparatus may be used in a vehicle, and is configured to project driving-related information, such as instrument information and navigation information, onto a driver's front field of view. In this way, the driver can know the driving-related information without a need to look down to observe a dashboard or a navigation device in a driving process. This improves driving safety.

To better integrate the information projected by the head-up display apparatus with a driving scenario, a stereoscopic displaying technology based on a binocular parallax principle, especially a naked-eye stereoscopic displaying technology, starts to be applied to the head-up display apparatus. However, the head-up display apparatus in a related technology still has room for improvement in stereoscopic displaying effect.

### SUMMARY

Embodiments of this application provide a projection lens, an image generation apparatus, a display device, and a transportation means, to improve stereoscopic displaying effect of the image generation apparatus.

To achieve the foregoing objectives, the following technical solutions are used in embodiments of this application.

According to a first aspect, an embodiment of this application provides a projection lens. The projection lens includes a first imaging lens, a light adjustment apparatus, and a second imaging lens. The light adjustment apparatus is disposed between the first imaging lens and the second imaging lens.

The first imaging lens is configured to: receive imaging light, and perform imaging on the imaging light on a side that is of the light adjustment apparatus and that is close to the first imaging lens, to form a relay image plane. The imaging light includes first imaging sub-light and second imaging sub-light, and the first imaging sub-light and the second imaging sub-light are respectively used to form a left-eye image and a right-eye image for implementing stereoscopic displaying.

The light adjustment apparatus is configured to: split the imaging light on the relay image plane. after split, the first imaging sub-light and the second imaging sub-light in the imaging light are projected onto the second imaging lens in different directions. The second imaging lens is configured to project the first imaging sub-light and the second imaging sub-light.

The projection lens of the foregoing structure is used, so that when the imaging light used to implement stereoscopic displaying based on a binocular parallax principle is received, beam splitting can be performed on the imaging light to form the first imaging sub-light and the second imaging sub-light that are spatially distributed, to implement a stereoscopic displaying function. In addition, the first imaging lens can form the relay image plane on a front side of the light adjustment apparatus, and one-to-one mapping of pixels in the image source module may be implemented on the relay image plane. The light adjustment apparatus performs beam splitting on the imaging light on the relay image plane. In this design, a distance between the light adjustment apparatus and a position at which the imaging light is emitted can be shortened, so that the light adjustment apparatus has good beam splitting effect for the imaging light, to facilitate achievement of good stereoscopic displaying effect.

In addition, beam splitting of the imaging light on the relay image plane is implemented by using the light adjustment apparatus in the projection lens, so that problems such as an image resolution loss, image distortion, and crosstalk between the left-eye image and the right-eye image caused by a diffusion screen can be avoided, to help improve stereoscopic displaying effect.

In addition, the projection lens can achieve the foregoing technical effect by adding only the first imaging lens and the light adjustment apparatus. A structure is simple, costs are low, and when the projection lens cooperates with the image source module to form the image generation apparatus, impact on costs and a volume of the image generation apparatus is small.

In some embodiments, the imaging light is non-polarized light, and the light adjustment apparatus includes at least one of a slit grating, a micro lens array, and a cylindrical lens array. The projection lens provided in this embodiment of this application is applicable to an application scenario in which the imaging light is non-polarized light, and a plurality of different optical devices may be selected for the light adjustment apparatus, which offers good adaptability and facilitates improvement of the projection lens.

In some embodiments, the imaging light is polarized light, and the light adjustment apparatus includes at least one of a slit grating, a micro lens array, a cylindrical lens array, and a polarization light adjustment element. The projection lens provided in this embodiment of this application is applicable to an application scenario in which the imaging light is polarized light, and a plurality of different optical devices may be selected for the light adjustment apparatus, which offers good adaptability and facilitates improvement of the projection lens.

In some embodiments, the polarization light adjustment element includes at least one of a polarization grating and a polarization lens. The polarization grating and the polarization lens have advantages such as good beam splitting effect, a simple structure, low costs, and a small occupied volume. On the basis of ensuring that the projection lens can achieve the foregoing technical effect, the polarization grating and the polarization lens have small impact on the costs and the volume.

In some embodiments, the projection lens includes two second imaging lenses, and the two second imaging lenses are respectively configured to project the first imaging sub-light and the second imaging sub-light. In the projection lens provided in this embodiment of this application, separate second imaging lenses are respectively disposed in correspondence to the first imaging sub-light and the second imaging sub-light. This design helps improve projection quality of the projection lens, and crosstalk between the first imaging sub-light and the second imaging sub-light can be further avoided, to ensure stereoscopic displaying effect.

In some embodiments, the first imaging lens is configured to: receive the imaging light, and form an enlarged real image on the relay image plane. This design helps improve beam splitting effect of the light adjustment apparatus for the imaging light, to improve stereoscopic displaying effect.

In some embodiments, the imaging light includes at least two imaging sub-light pairs, each of the imaging sub-light pairs includes a first imaging sub-light and a second imaging sub-light, and each of the imaging sub-light pairs is separately used to form one stereoscopic displaying viewing point. The light adjustment apparatus is configured to: split the imaging light on the relay image plane, project different imaging sub-light pairs onto the projection lens in different directions, and project first imaging sub-light and second imaging sub-light in a same imaging sub-light pair onto the projection lens in different directions.

The projection lens provided in this embodiment of this application is applicable to a case in which there are a plurality of stereoscopic displaying viewing points, and at least two stereoscopic displaying viewing points can be formed at different positions, so that a stereoscopic displaying viewing angle can be expanded.

According to a second aspect, an embodiment of this application provides an image generation apparatus, including an image source module and the projection lens according to any one of the embodiments of the first aspect.

The image source module is configured to: form, based on image data, imaging light that includes image information, and project the imaging light onto the projection lens.

In some embodiments, the image source module includes a light source, a liquid crystal on silicon, and a polarizing beam splitter. The light source is configured to provide an illumination light beam projected onto the polarizing beam splitter. The polarizing beam splitter is configured to: perform polarization splitting on the illumination light beam to form a first light beam, and project the first light beam onto the liquid crystal on silicon, where a polarization direction of the first light beam is a first polarization direction.

The liquid crystal on silicon is configured to: form the imaging light; and project the imaging light onto the polarizing beam splitter, to project the imaging light onto the projection lens through the polarizing beam splitter, where a polarization direction of the imaging light is a second polarization direction, and the first polarization direction and the second polarization direction are perpendicular to each other.

In some embodiments, the image source module includes a light source, a digital micromirror device, and a total internal reflection prism. The light source is configured to provide an illumination light beam projected onto the total internal reflection prism. The total internal reflection prism is configured to: reflect the illumination light beam to form a first light beam projected onto the digital micromirror device; and transmit the imaging light formed by the digital micromirror device.

The digital micromirror device is configured to: modulate the first light beam based on the image data to form the imaging light; and project the imaging light onto the projection lens through the total internal reflection prism.

In some embodiments, the image source module includes a light source and a liquid crystal display. The light source is configured to provide an illumination light beam projected onto the liquid crystal display.

The liquid crystal display is configured to: modulate the illumination light beam based on the image data to form the imaging light, and project the imaging light onto the projection lens.

According to a third aspect, an embodiment of this application provides a display device. The display device includes a processor and the image generation apparatus according to any one of the embodiments of the second aspect, and the processor is configured to control the image generation apparatus to form imaging light.

In some embodiments, the display device further includes a diffusion screen and a first reflection element. The diffusion screen is disposed on a light output side of the image generation apparatus, and is configured to: receive the imaging light and perform imaging. The first reflection element is configured to reflect imaging information on the diffusion screen to a preset position.

According to a fourth aspect, an embodiment of this application provides a transportation means. The transportation means includes the display device according to the embodiment of the second aspect, and the display device is mounted on the transportation means.

In some embodiments, the transportation means further includes a second reflection element, the display device is configured to project imaging light onto the second reflection element, and the second reflection element is configured to reflect the imaging light.

Technical effects that can be achieved by the image generation apparatus, the display device, and the transportation means provided in embodiments of this application are the same as technical effects that can be achieved by the image generation apparatus in any one of the foregoing embodiments. Details are not described herein again.

### BRIEF DESCRIPTION OF DRAWINGS

FIG. 1 is a diagram of a structure of a stereoscopic displaying device according to a related technology;
FIG. 2 is a diagram of a structure of another stereoscopic displaying device according to a related technology;
FIG. 3 is a diagram of a structure of a projection lens according to an embodiment of this application;
FIG. 4 is a diagram of a structure of another projection lens according to an embodiment of this application;
FIG. 5 is a diagram of a structure of an image generation apparatus according to an embodiment of this application;
FIG. 6 is a diagram of a structure of an image generation apparatus using a liquid crystal on silicon according to an embodiment of this application;
FIG. 7 is a diagram of a structure of a polarizing beam splitter in FIG. 6;
FIG. 8 is a diagram of a structure of an image generation apparatus using a digital micromirror device according to an embodiment of this application;
FIG. 9 is a diagram of a structure of an image generation apparatus using a liquid crystal display according to an embodiment of this application;
FIG. 10A to FIG. 10D are diagrams of different application scenarios of an image generation apparatus according to this application;
FIG. 11 is a diagram of a structure of a display device according to an embodiment of this application;
FIG. 12 is a circuit schematic of a display device according to an embodiment of this application;
FIG. 13 is a diagram of a structure of a transportation means according to an embodiment of this application; and
FIG. 14 is a functional diagram of a transportation means according to an embodiment of this application.

### DESCRIPTION OF EMBODIMENTS

The following describes the technical solutions in embodiments of this application with reference to the accompanying drawings in embodiments of this application. It is clear that the described embodiments are merely some but not all of embodiments of this application.

Terms such as "first" and "second" mentioned below in embodiments of this application are merely used for ease of description, and shall not be understood as an indication or implication of relative importance or implicit indication of a quantity of indicated technical features. Therefore, a feature limited by "first", "second", or the like may explicitly or implicitly indicate that one or more such features are included. In the descriptions of this application, unless otherwise stated, "a plurality of" means two or more than two.

In embodiments of this application, "up", "down", "left", and "right" are not limited to definitions relative to directions in which components are schematically placed in accompanying drawings. It should be understood that these directional terms may be relative concepts used for relative description and clarification, and may change correspondingly based on a change of a direction in which a component in an accompanying drawing is placed.

In embodiments of this application, unless otherwise specified in the context, in the entire specification and claims, the term "include" is interpreted as "open and inclusive", that is, "include, but not limited to". In the description of the specification, terms such as "an embodiment", "some embodiments", "example embodiments", "examples", or "some examples" are intended to indicate that specific features, structures, materials, or features related to embodiments or examples are included in at least one embodiment or example of this application. The foregoing schematic representations of the terms do not necessarily refer to a same embodiment or example. Further, the particular feature, structure, material, or characteristic may be included in any one or more embodiments or examples in any appropriate manner.

As used in this specification, "about", "generally", or "approximately" includes the stated values and the average values within an acceptable deviation range of a particular value, where the acceptable deviation range is determined by a person of ordinary skill in the art by considering an error (namely, a limitation of a measurement system) related to measurement being discussed and measurement of a specific quantity.

As used in this specification, "parallel", "perpendicular to", and "equal to" include described cases and similar cases. A range of a similar case is in an acceptable deviation range. The acceptable deviation range is determined by a person of ordinary skill in the art by considering an error (namely, a limitation of a measurement system) related to measurement being discussed and measurement of a specific quantity. For example, "parallel" includes "absolutely parallel" and "approximately parallel", and an acceptable deviation range of "approximately parallel" may be, for example, a deviation within 5°. "Perpendicular to" includes "absolutely perpendicular to" and "approximately perpendicular to", and an acceptable deviation range of "approximately perpendicular to" may also be, for example, a deviation within 5°. "Equal to" includes "absolutely equal to" and "approximately equal to". An acceptable deviation range of "approximately equal to" may be that, for example, a difference between two equal objects is less than or equal to 5% of either of the two objects.

It should be understood that, when a layer or an element is referred to as on another layer or substrate, the layer or element may be directly on the another layer or substrate, or an intermediate layer may exist between the layer or element and the another layer or substrate.

In embodiments of this application, an example implementation is described with reference to a sectional view and/or a plane diagram and/or an equivalent circuit schematic that are/is used as idealized example accompanying drawings. In the accompanying drawings, for clarity, thicknesses of layers and regions are enlarged. There, a change in a shape in the accompanying drawings due to, for example, manufacturing techniques and/or tolerances may be envisaged. Therefore, example implementations should not be construed as being limited to a shape of a region shown herein, but rather include shape deviations due to, for example, manufacturing. For example, an etching region shown as a rectangle typically has a bending feature. Therefore, the regions shown in the accompanying drawings are essentially examples, and their shapes are not intended to show actual shapes of regions of a device, and are not intended to limit a scope of the example implementations.

To improve displaying effect, some display devices have a stereoscopic (3D) display function. Currently, the stereoscopic displaying function of the display device may be implemented by using a beam splitting stereoscopic displaying technology based on a binocular parallax principle. That is, based on a visual difference between binoculars (left eye and right eye) of an observer, a left-eye image that may be seen by the left eye of the observer and a right-eye image that may be seen by the right eye of the observer are separately presented. The left-eye image and the left-eye image are mixed in a brain of the observer, to achieve visual stereoscopic displaying effect.

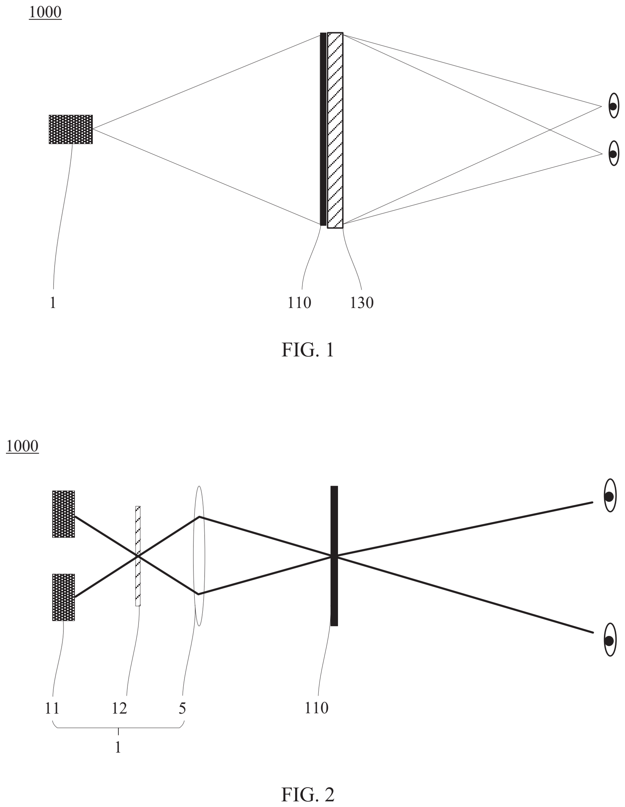

FIG. 1 is a diagram of a structure of a stereoscopic displaying device 1000 according to a related technology. As shown in FIG. 1, the stereoscopic displaying device 1000 includes an image generation apparatus (picture generation unit, PGU) 1, a diffusion screen 110, and a light adjustment element 130. The image generation apparatus 1 is configured to: generate a binocular interleaved image for stereoscopic display, and project the binocular interleaved image onto the diffusion screen 110. The light adjustment element 130 is disposed on a side that is of the diffusion screen 110 and that is away from the image generation apparatus 1, that is, a light output side of the diffusion screen 110, and performs beam splitting on the binocular interleaved image on the diffusion screen 110, to form a left-eye image and a right-eye image that are spatially distributed. When the left eye of an observer observes the left-eye image and the right eye of the observer observes the right-eye image, stereoscopic displaying visual effect can be achieved.

FIG. 2 is a diagram of a structure of another stereoscopic displaying device 1000 according to a related technology. As shown in FIG. 2, the stereoscopic displaying device 1000 includes an image generation apparatus 1 and a diffusion screen 110. The image generation apparatus 1 includes a display chip 12, two groups of directional backlights 11 with different light output directions, and a projection lens 5. In the image generation apparatus 1 of the stereoscopic displaying device 1000, a left-eye image and a right-eye image that are used to implement stereoscopic displaying are formed through time-division modulation by controlling switches of two groups of directional backlights 11 and by using a time-division high-refresh-rate feature of the display chip 12. The image generation apparatus 1 separately projects the left-eye image and the right-eye image onto the diffusion screen 110 through the projection lens 5, so that the diffusion screen 110 can quickly and alternately display the left-eye image and the right-eye image. When the left eye of an observer observes the left-eye image and the right eye of the observer observes the right-eye image, stereoscopic displaying visual effect can be achieved.

Although the stereoscopic displaying devices 1000 in the foregoing related technologies may implement a stereoscopic displaying function, the stereoscopic displaying devices 1000 still have some disadvantages. For example, in the stereoscopic displaying device 1000 shown in FIG. 1, scattering effect of the diffusion screen 110 and a structural feature of the diffusion screen 110 may lead to problems such as a resolution loss and image distortion in a displayed image, and may further lead to generation of crosstalk between the left-eye image and the right-eye image used for stereoscopic display, which affects stereoscopic displaying effect. In the stereoscopic displaying device 1000 shown in FIG. 2, the diffusion screen 110 may also affect stereoscopic displaying effect. In addition, because a quantity of backlights is increased and a high requirement is imposed on a refresh rate of the display chip 12, the stereoscopic displaying device 1000 in FIG. 2 has problems of a large volume and high costs.

Based on this, embodiments of this application provide a projection lens, an image generation apparatus, a display device, and a transportation means, to improve stereoscopic displaying effect of the image generation apparatus.

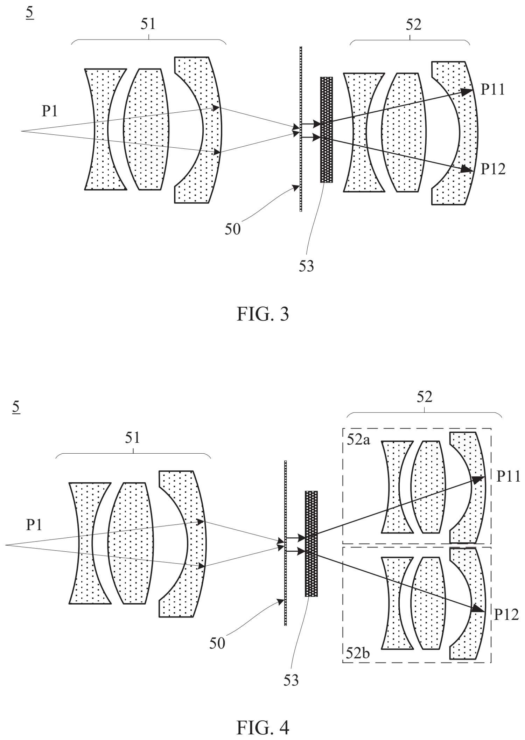

As shown in FIG. 3, a projection lens 5 provided in an embodiment of this application includes a first imaging lens 51, a light adjustment apparatus 53, and a second imaging lens 52. The light adjustment apparatus 53 is disposed between the first imaging lens 51 and the second imaging lens 52.

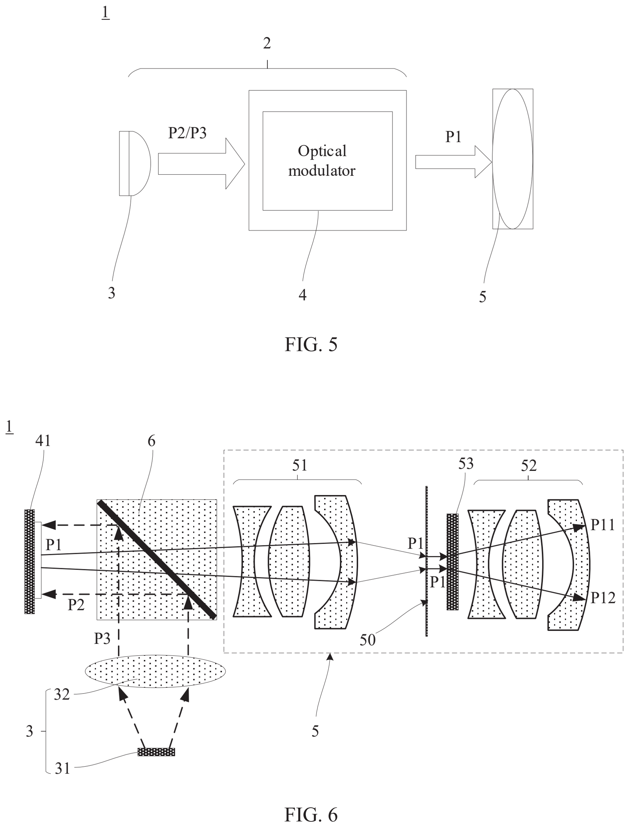

In the projection lens 5, the first imaging lens 51 is configured to receive imaging light P1. The imaging light P1 may be imaging light P1 that is emitted by an image source module 2 (refer to FIG. 5) in an image generation apparatus 1 and that is used to implement stereoscopic displaying based on a binocular parallax principle. The imaging light P1 includes first imaging sub-light P11 and second imaging sub-light P12, and the first imaging sub-light P11 and the second imaging sub-light P12 are respectively used to form a left-eye image and a right-eye image for implementing stereoscopic displaying.

After receiving the imaging light P1, the first imaging lens 51 performs imaging on the imaging light P1 on a side that is of the light adjustment apparatus 53 and that is close to the first imaging lens 51, to form a relay image plane 50. One-to-one mapping of pixels in the image source module 2 may be implemented on the relay image plane 50. Herein, imaging performed by the first imaging lens 51 on the imaging light P1 satisfies an imaging formula. A distance between the first imaging lens 51 and a position at which the imaging light P1 is emitted (the image source module 2), a distance between the first imaging lens 51 and the light adjustment apparatus 53, and a lens parameter of the first imaging lens 51 are controlled, so that an image plane for imaging of the imaging light P1 performed after the imaging light P1 passes through the first imaging lens 51 is located on the side that is of the light adjustment apparatus 53 and that is close to the first imaging lens 51. In other words, the first imaging lens 51 may be controlled to perform imaging on the imaging light P1 on the side that is of the light adjustment apparatus 53 and that is close to the first imaging lens 51, to form the relay image plane 50. One-to-one mapping of the pixels in the image source module 2 may be implemented on the relay image plane 50. Forming of the relay image plane 50 is equivalent to shortening a distance between the position at which the imaging light P1 is emitted and the light adjustment apparatus 53, which is conducive to processing of the light adjustment apparatus 53 on the imaging light P1.

The light adjustment apparatus 53 is configured to split the imaging light P1 on the relay image plane 50, and after split, the first imaging sub-light P11 and the second imaging sub-light P12 in the imaging light P1 are projected onto the second imaging lens 52 in different directions, to form the first imaging sub-light P11 and the second imaging sub-light P12 that are spatially distributed. The first imaging sub-light P11 and the second imaging sub-light P12 that are spatially distributed are irradiated on different positions through the second imaging lens 52, to form the left-eye image and the right-eye image that are spatially distributed. When the left eye of an observer observes the left-eye image and the right eye of the observer observes the right-eye image, stereoscopic displaying effect can be achieved.

It can be learned from this that, when receiving the imaging light P1 used to implement stereoscopic displaying based on the binocular parallax principle, the projection lens 5 provided in this embodiment of this application can split the imaging light P1 to form the first imaging sub-light P11 and the second imaging sub-light P12 that are spatially distributed, to implement a stereoscopic displaying function. In addition, the first imaging lens 51 can form the relay image plane 50 on a front side of the light adjustment apparatus 53, and one-to-one mapping of the pixels in the image source module 2 may be implemented on the relay image plane 50. The light adjustment apparatus 53 performs beam splitting on the imaging light P1 on the relay image plane 50. In this design, the distance between the light adjustment apparatus 53 and the position at which the imaging light P1 is emitted can be shortened, so that the light adjustment apparatus 53 has good beam splitting effect for the imaging light P1, to facilitate achievement of good stereoscopic displaying effect.

In addition, beam splitting of the imaging light P1 on the relay image plane 50 is implemented by using the light adjustment apparatus 53 in the projection lens 5, so that problems such as an image resolution loss, image distortion, and crosstalk between the left-eye image and the right-eye image caused by a diffusion screen 110 can be avoided, to help improve stereoscopic displaying effect.

In addition, the projection lens 5 can achieve the foregoing technical effect by adding only the first imaging lens 51 and the light adjustment apparatus 53. A structure is simple, costs are low, and when the projection lens 5 cooperates with the image source module 2 to form the image generation apparatus 1, impact on costs and a volume of the image generation apparatus 1 is small.

It can be learned from the foregoing description that a shorter distance between the relay image plane 50 and the light adjustment apparatus 53 indicates better beam splitting effect of the light adjustment apparatus 53 for the imaging light P1 on the relay image plane 50. Therefore, a size and an optical parameter of the first imaging lens 51, the distance between the first imaging lens 51 and the position at which the imaging light P1 is emitted, and the distance between the first imaging lens 51 and the light adjustment apparatus 53 may be controlled, so that the relay image plane 50 formed by performing imaging on the imaging light P1 by the first imaging lens 51 is close to the light adjustment apparatus 53 to a greatest extent. In the projection lens 5 provided in this embodiment of this application, the light adjustment apparatus 53 may be an optical device that implements beam splitting on the imaging light P1 based on a feature such as refraction, diffraction, blocking, a polarization state, or a wavelength. For example, the light adjustment apparatus 53 may include at least one of a slit grating, a micro lens array, a cylindrical lens array, a polarization lens, and a polarization grating.

In different application scenarios, the imaging light P1 may be polarized light, or may be non-polarized light (natural light). When the imaging light P1 is non-polarized light, the light adjustment apparatus 53 may be a non-polarization light adjustment element. The non-polarization light adjustment element is an optical device applicable to performing beam splitting on non-polarized light and polarized light, and has no requirement on a polarization state. For example, the non-polarization light adjustment element includes at least one of the slit grating, the micro lens array, and the cylindrical lens array.

When the imaging light P1 is polarized light, the light adjustment apparatus 53 may be a non-polarization light adjustment element, or may be a polarization light adjustment element. The polarization light adjustment element is an optical device applicable to performing beam splitting on specific polarized light. When the light adjustment apparatus 53 is a polarization light adjustment element, the polarization light adjustment element needs to be able to be configured to split the imaging light P1. For example, the imaging light P1 is polarized light in a first polarization direction, and the polarization light adjustment element needs to be able to be configured to split polarized light in the first polarization direction.

For example, the polarization light adjustment element may be a liquid crystal grating or a liquid crystal lens. In other words, when the imaging light P1 is polarized light in the first polarization direction, the light adjustment apparatus 53 includes at least one of the slit grating, the micro lens array, the cylindrical lens array, the polarization lens, and the polarization grating, where both the polarization grating and the polarization lens can be configured to split the polarized light in the first polarization direction.

In some embodiments, as shown in FIG. 4, the projection lens 5 may include two second imaging lenses (52a and 52b), and the two second imaging lenses (52a and 52b) are respectively configured to project the first imaging sub-light P11 and the second imaging sub-light P12. In the projection lens 5 provided in this embodiment of this application, separate second imaging lenses are respectively disposed in correspondence to the first imaging sub-light P11 and the second imaging sub-light P12. This helps improve projection quality of the projection lens 5, and crosstalk between the first imaging sub-light P11 and the second imaging sub-light P12 can be further avoided, to ensure stereoscopic displaying effect.

In some embodiments, the first imaging lens 51 is configured to: receive the imaging light P1, and form an enlarged real image on the side that is of the light adjustment apparatus 53 and that is close to the first imaging lens 51. In other words, there is the enlarged real image on the relay image plane 50. This design is more conducive to performing beam splitting on the imaging light P1 by the light adjustment apparatus 53, so that better stereoscopic displaying effect can be obtained.

In some embodiments, the imaging light P1 includes at least two imaging sub-light pairs, each of the imaging sub-light pairs includes a first imaging sub-light P11 and a second imaging sub-light P12, and the first imaging sub-light P11 and the second imaging sub-light P12 in each of the imaging sub-light pairs can form a binocular parallax image for implementing stereoscopic displaying. Each of the imaging sub-light pairs is separately used to form one stereoscopic displaying viewing point.

The first imaging lens 51 is configured to: receive the imaging light P1, and form the relay image plane 50 on the side that is of the light adjustment apparatus 53 and that is close to the first imaging lens 51. The light adjustment apparatus 53 is configured to split the imaging light P1 on the relay image plane 50. after split, different imaging sub-light pairs are projected onto the second imaging lens 52 in different directions, and first imaging sub-light P11 and second imaging sub-light P12 in a same imaging sub-light pair are projected onto the second imaging lens 52 in different directions. In this design, a plurality of viewing points that are spatially distributed can be formed. In this way, observers at different positions can simultaneously see the left-eye image and the right-eye image, to implement the stereoscopic displaying function, and expand a stereoscopic displaying viewing angle. It can be learned from this that the projection lens 5 provided in this embodiment of this application is applicable to an application scenario in which there are a plurality of viewing points and a large viewing angle.

In addition, it should be noted that although FIG. 3 and FIG. 4 show that the first imaging lens 51 and the second imaging lens 52 each include three optical lenses, this is merely an example for description. More or fewer optical lenses may be disposed on each of the first imaging lens 51 and the second imaging lens 52 as required.

In addition, an embodiment of this application provides an image generation apparatus. As shown in FIG. 5, the image generation apparatus 1 uses the projection lens 5 in the foregoing embodiment, and further includes an image source module 2 that can emit imaging light P1. The image source module 2 includes a light source 3 and an optical modulator 4.

The light source 3 is configured to generate an illumination light beam P3, and the illumination light beam P3 may be directly projected onto the optical modulator 4, or may form a first light beam P2 by using an intermediate structure (not shown in FIG. 5) such as a beam splitting device. The first light beam P2 is projected onto the optical modulator 4. The optical modulator 4 is configured to modulate, based on image data, a light beam (the first light beam P2 or the illumination light beam P3) projected onto the optical modulator 4, to form the imaging light P1 including image information. The image data is image data for implementing stereoscopic displaying based on a binocular parallax principle, and the image data includes left-eye image data for forming a left-eye image and right-eye image data for forming a right-eye image. Therefore, the imaging light P1 formed by the image source module 2 includes first imaging sub-light P11 corresponding to the left-eye image data and second imaging sub-light P12 corresponding to the right-eye image data. The first imaging sub-light P11 and the second imaging sub-light P12 are mixed together, and are collectively referred to as the imaging light P1.

The optical modulator 4 may be at least one of a liquid crystal on silicon (liquid crystal on silicon, LCoS), a digital micromirror device (digital micromirror device, DMD), and a liquid crystal display (liquid crystal display, LCD).

The following describes the image generation apparatus 1 provided in this embodiment of this application by using examples in which the optical modulator 4 is separately the liquid crystal on silicon, the digital micromirror device, and the liquid crystal display.

In some embodiments, as shown in FIG. 6, the image generation apparatus 1 includes the light source 3, a polarizing beam splitter (polarizing beam splitter, PBS) 6, a liquid crystal on silicon 41, and the projection lens 5.

The light source 3 is configured to generate the illumination light beam P3 irradiated on the polarizing beam splitter 6. The illumination light beam P3 may be natural light (non-polarized light), or may be a mixed light beam (polarized light) of P (parallel)-polarized light and S (perpendicular)-polarized light, or may be polarized light (one of P-polarized light and S-polarized light) applicable to the liquid crystal on silicon 41.

For example, the light source 3 may include a light-emitting element 31 and an optical element 32, and the light-emitting element 31 may be a light-emitting diode (light-emitting diode, LED) or a laser diode (Laser Diode, LD). The optical element 32 may be configured to focus and collimate a light beam generated by the light-emitting element 31, and may be further configured to perform polarization processing on the light beam generated by the light-emitting element 31, to form the illumination light beam P3 projected onto the polarizing beam splitter 6.

In this embodiment, an example in which the illumination light beam P3 generated by the light source 3 is natural light is used to describe the image generation apparatus 1 in this embodiment.

The polarizing beam splitter 6 is a prism that can implement polarizing beam splitting, and may split an incident light beam into S-polarized light and P-polarized light, and emit the S-polarized light and the P-polarized light in different directions for irradiation on different positions.

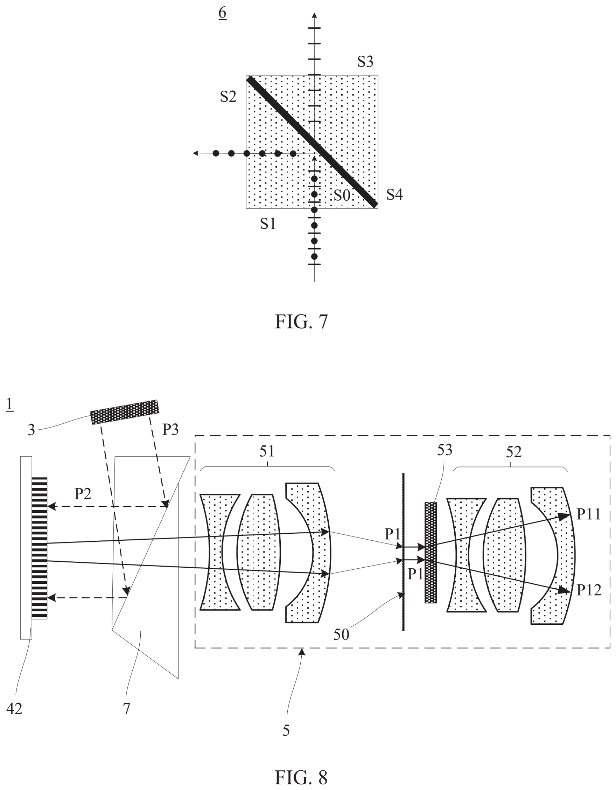

For example, as shown in FIG. 7, the polarizing beam splitter 6 has four outer side surfaces: a first side surface S1, a second side surface S2, a third side surface S3, and a fourth side surface S4. The polarizing beam splitter 6 further has a beam splitting surface S0, and the beam splitting surface S0 may reflect the S-polarized light and transmit the P-polarized light.

When the incident light beam including the P-polarized light and the S-polarized light is irradiated on the beam splitting surface S0 through the first side surface S1, the S-polarized light (represented by a dot symbol in FIG. 7) reflected by the beam splitting surface S0 is emitted from the second side surface S2, and the P-polarized light (represented by a perpendicular short line symbol in FIG. 7) transmitted by the beam splitting surface S0 is emitted from the third side surface S3, to implement a polarizing beam splitting function.

In this embodiment, the light source 3 is disposed opposite to the first side surface S1 of the polarizing beam splitter 6, the illumination light beam P3 generated by the light source 3 is irradiated on the beam splitting surface S0 through the first side surface S1, and the beam splitting surface S0 splits the illumination light beam P3 into the first light beam P2 and a second light beam. The first light beam P2 is one of S-polarized light and P-polarized light, and the second light beam is the other of S-polarized light and P-polarized light. After splitting the illumination light beam P3 into the first light beam P2 and the second light beam, the polarizing beam splitter 6 emits the first light beam P2 and the second light beam in different directions for irradiation on different positions.

For example, in this embodiment, the first light beam P2 is S-polarized light, that is, a part that is of the illumination light beam P3 and that is reflected by the beam splitting surface S0, and the first light beam P2 is emitted through the second side surface S2. The second light beam is P-polarized light, that is, a part that is of the illumination light beam P3 and that is transmitted by the beam splitting surface S0, and the second light beam is emitted through the third side surface S3.

The liquid crystal on silicon 41 is disposed on a side opposite to the second side surface S2 of the polarizing beam splitter 6, and the first light beam P2 emitted through the second side surface S2 is irradiated on the liquid crystal on silicon 41.

The liquid crystal on silicon 41 is a reflective display chip, including a complementary metal oxide semiconductor (complementary metal oxide semiconductor, CMOS) substrate, a liquid crystal layer, and a glass substrate. The CMOS substrate includes a CMOS drive circuit and a metal reflector. The CMOS drive circuit is manufactured on a silicon wafer by using a CMOS process. After manufacturing of the CMOS drive circuit is completed, the silicon wafer is smoothed by using a grinding technology, and is plated with a metal layer used as the metal reflector. The glass substrate has a transparent electrode, the CMOS substrate and the glass substrate are disposed opposite to each other, and the liquid crystal layer is disposed between the CMOS substrate and the glass substrate.

The liquid crystal on silicon 41 includes a plurality of pixels arranged in an array, a plurality of pixel electrodes are disposed on the CMOS substrate in correspondence to the pixels, and a common electrode is disposed on the CMOS substrate or the glass substrate. A voltage is applied to the pixel electrode, so that a liquid crystal corresponding to the pixel at the liquid crystal layer can be controlled, to modulate light passing through the pixel.

In this embodiment, after the first light beam P2 is incident to the liquid crystal on silicon 41, the liquid crystal on silicon 41 modulates the first light beam P2 based on the image data to form the imaging light P1 including the image information. The image data may be the image data for implementing stereoscopic displaying based on the binocular parallax principle, and the image data includes the left-eye image data for forming the left-eye image and the right-eye image data for forming the right-eye image.

Some pixels in the liquid crystal on silicon 41 modulate the first light beam P2 based on the left-eye image data, to form the first imaging sub-light P11 including left-eye image information, and some pixels in the liquid crystal on silicon 41 modulate the first light beam P2 based on the right-eye image data, to form the second imaging sub-light P12 including right-eye image information. The first imaging sub-light P11 and the second imaging sub-light P12 are mixed together, and are collectively referred to as the imaging light P1.

For example, the plurality of pixels arranged in the array in the liquid crystal on silicon 41 include a plurality of left-eye pixels used to form the first imaging sub-light P11 and a plurality of right-eye pixels used to form the second imaging sub-light P12. A right-eye pixel and a left-eye pixel are disposed adjacently.

The imaging light P1 formed by the liquid crystal on silicon 41 is polarized light whose polarization direction is perpendicular to a polarization direction of the first light beam P2. In this specification, it is defined that the polarization direction of the first light beam P2 is a first polarization direction, the polarization direction of the imaging light P1 is a second polarization direction, and the first polarization direction and the second polarization direction are perpendicular to each other. In other words, the imaging light P1 may be one of P-polarized light and S-polarized light, and the first light beam P2 is the other of P-polarized light and S-polarized light.

In this embodiment, an example in which the first light beam P2 is S-polarized light and the imaging light P1 is P-polarized light is used to describe the image generation apparatus 1 in which the liquid crystal on silicon 41 is used. A person skilled in the art may perform adaptive adjustment based on the description in this specification for a case in which the first light beam P2 is P-polarized light and the imaging light P1 is S-polarized light.

It can be learned from the foregoing description that the imaging light P1 is P-polarized light, and the imaging light P1 is irradiated on the second side surface S2 of the polarizing beam splitter 6 and irradiated on the beam splitting surface S0 of the polarizing beam splitter 6 through the second side surface S2. It can be learned from the foregoing description that the beam splitting surface S0 of the polarizing beam splitter 6 may transmit the P-polarized light. Therefore, the imaging light P1 may pass through the beam splitting surface S0 of the polarizing beam splitter 6, and is emitted from the third side surface S3 of the polarizing beam splitter 6 and irradiated on the projection lens 5.

When the imaging light P1 is irradiated on the projection lens 5, a first imaging lens 51 in the projection lens 5 is configured to: receive the imaging light P1, and perform imaging on a side that is of a light adjustment apparatus 53 and that is close to the first imaging lens 51, to form a relay image plane 50. One-to-one mapping of pixels in the liquid crystal on silicon 41 may be implemented on the relay image plane 50. The light adjustment apparatus 53 performs beam splitting on the imaging light P1 on the relay image plane 50, and after split, the first imaging sub-light P11 and the second imaging sub-light P12 in the imaging light P1 are projected onto a second imaging lens 52 in different directions, to form the first imaging sub-light P11 and the second imaging sub-light P12 that are spatially distributed. The first imaging sub-light P11 and the second imaging sub-light P12 that are spatially distributed are irradiated on different positions through the second imaging lens 52, to form the left-eye image and the right-eye image that are spatially distributed. When the left eye of an observer observes the left-eye image and the right eye of the observer observes the right-eye image, stereoscopic displaying effect can be achieved.

It can be seen that, in the image generation apparatus 1 having the projection lens 5, a stereoscopic displaying function can be implemented. In addition, the first imaging lens 51 in the projection lens 5 can form the relay image plane 50 on a front side of the light adjustment apparatus 53. In this design, a distance between the light adjustment apparatus 53 and a position at which the imaging light P1 is emitted (liquid crystal on silicon 41) can be shortened, so that the light adjustment apparatus 53 has good beam splitting effect for the imaging light P1, and good stereoscopic displaying effect can be achieved.

In addition, beam splitting of the imaging light P1 on the relay image plane 50 is implemented by using the light adjustment apparatus 53 in the projection lens 5, so that problems such as an image resolution loss, image distortion, and crosstalk between the left-eye image and the right-eye image caused by a diffusion screen can be avoided, to improve stereoscopic displaying effect of the image generation apparatus 1.

The imaging light P1 formed by the liquid crystal on silicon 41 is polarized light. Therefore, in the projection lens 5 used for the image generation apparatus 1, the light adjustment apparatus 53 may be a polarization light adjustment element, or may be a non-polarization light adjustment element.

For example, the light adjustment apparatus 53 in the projection lens 5 may be a polarization lens. The polarization lens may be a micro lens array, or may be a cylindrical lens array, and includes a lens array formed by a plurality of sub-lenses. One sub-lens is disposed in correspondence to at least two adjacent pixels. When light is emitted by the pixels corresponding to the sub-lens, the sub-lens may differentially refract the light emitted from different positions, and emit the light emitted by different pixels in different directions, to implement a beam splitting function. The pixels corresponding to the sub-lens include a left-eye pixel and a right-eye pixel that are adjacent to each other. Therefore, beam splitting of the imaging light P1 can be implemented through disposition of the lens array formed by the foregoing sub-lenses. after split, the first imaging sub-light P11 and the second imaging sub-light P12 in the imaging light P1 are emitted in different directions.

The polarization lens is a polarization-dependent lens array, and the sub-lenses in the lens array refract only specific polarized light, and have no impact on other polarized light. In this embodiment, the polarization lens is applicable to performing beam splitting on the P-polarized light through refraction, that is, can be configured to split the imaging light P1. The foregoing features of the polarization lens may be implemented by using a material such as a liquid crystal.

For another example, the light adjustment apparatus 53 in the projection lens 5 may be a polarization grating. The polarization grating is a barrier grating, and includes a grating array formed by a plurality of sub-gratings. One sub-grating is disposed in correspondence to at least two adjacent pixels. When light is emitted by the pixels corresponding to the sub-grating, the sub-grating may differentially block the light emitted from different positions, so that the light emitted by different pixels is emitted in different directions, to implement a beam splitting function. The pixel corresponding to the sub-grating includes a left-eye pixel and a right-eye pixel that are adjacent to each other. Therefore, beam splitting of the imaging light P1 can be implemented through disposition of the grating array formed by the foregoing sub-gratings. after split, the first imaging sub-light P11 and the second imaging sub-light P12 in the imaging light P1 are emitted in different directions.

The polarization grating is a polarization-dependent grating array, and the sub-gratings in the grating array refract only specific polarized light, and have no impact on other polarized light. In this embodiment, the polarization grating is applicable to performing beam splitting on the P-polarized light through blocking, that is, can be configured to split the imaging light P1. For example, the polarization grating may be a grating structure formed by using a P-polarizer, or may implement the foregoing functions by using a material such as a liquid crystal.

In some embodiments, as shown in FIG. 8, the image generation apparatus 1 includes the image source module 2 and the projection lens 5. The image source module 2 includes the light source 3, a total internal reflection prism (TIR prism) 7, and a digital micromirror device 42. The light source 3 is configured to generate the illumination light beam P3 irradiated on the total internal reflection prism 7. For details about the light source 3, refer to the foregoing related content. Details are not described herein again.

The total internal reflection prism 7 plays a role of steering and eliminating stray light in the image source module 2. The total internal reflection prism 7 is disposed between the digital micromirror device 42 and the light source 3, and is configured to reflect a part or all of the illumination light beam P3 emitted by the light source 3, to form the first light beam P2 irradiated on the digital micromirror device 42. The total internal reflection prism 7 also allows the imaging light P1 formed by the digital micromirror device 42 to pass through and be irradiated onto the projection lens 5.

The total internal reflection prism 7 is disposed, so that quality of a light beam incident to the digital micromirror device 42 can be improved, and disposition positions of the light source 3, the digital micromirror device 42, and the projection lens 5 in the image generation apparatus 1 can be optimized. In this way, a structure of the image generation apparatus 1 is more compact, which facilitates a miniaturization design.

The digital micromirror device 42 receives the first light beam P2, and modulates the first light beam P2 based on the image data to form the imaging light P1 including the image information. Similar to the liquid crystal on silicon 41, the digital micromirror device 42 is a reflective display chip based on a CMOS process. A difference lies in that the digital micromirror device 42 is a micro-electrical-mechanical system (micro-electrical-mechanical system, MEMS) for electronic input and optical output, and includes a CMOS substrate and a plurality of micromirrors arranged on the CMOS substrate in an array. One micromirror corresponds to one pixel. A quantity of micromirrors in the digital micromirror device 42 is related to resolution of the digital micromirror device 42.

In the digital micromirror device 42, the micromirror is a reflection mirror that can be flipped, and flipping of the micromirror is controlled by a digital drive signal from the CMOS substrate. Flipping angles of the micromirrors are controlled, so that the micromirrors can face different directions, and the micromirrors facing different directions can make reflection directions of incident light different. When reflected light of the micromirror is projected onto the projection lens 5, one pixel in a picture may be illuminated. When reflected light of the micromirror is not projected onto the projection lens 5, one pixel in a picture may be turned off. Therefore, flipping of the micromirrors in the micromirror array is controlled, so that the first light beam P2 can be modulated.

In this embodiment, after the first light beam P2 is incident to the digital micromirror device 42, the digital micromirror device 42 modulates the first light beam P2 based on the image data to form the imaging light P1 including the image information. The image data may be the image data for implementing stereoscopic displaying based on the binocular parallax principle, and the image data includes the left-eye image data for forming the left-eye image and the right-eye image data for forming the right-eye image.

Some pixels (micromirrors) in the digital micromirror device 42 modulate the first light beam P2 based on the left-eye image data, to form the first imaging sub-light P11 including left-eye image information, and some pixels (micromirrors) in the digital micromirror device 42 modulate the first light beam P2 based on the right-eye image data, to form the second imaging sub-light P12 including right-eye image information. The first imaging sub-light P11 and the second imaging sub-light P12 are mixed together, and are collectively referred to as the imaging light P1.

For example, a plurality of pixels (micromirrors) arranged in an array in the digital micromirror device 42 include a plurality of left-eye pixels (micromirrors) used to form the first imaging sub-light P11, and a plurality of right-eye pixels (micromirrors) used to form the second imaging sub-light P12. A right-eye pixel (micromirror) and a left-eye pixel (micromirror) are disposed adjacently.

The imaging light P1 formed by the digital micromirror device 42 is irradiated on the projection lens 5 through the total internal reflection prism 7. The first imaging lens 51 in the projection lens 5 is configured to: receive the imaging light P1, and perform imaging on a side that is of a light adjustment apparatus 53 and that is close to a first imaging lens 51, to form a relay image plane 50. One-to-one mapping of pixels in the digital micromirror device 42 may be implemented on the relay image plane 50. The light adjustment apparatus 53 performs beam splitting on the imaging light P1 on the relay image plane 50, and after split, the first imaging sub-light P11 and the second imaging sub-light P12 in the imaging light P1 are projected onto a second imaging lens 52 in different directions, to form the first imaging sub-light P11 and the second imaging sub-light P12 that are spatially distributed. The first imaging sub-light P11 and the second imaging sub-light P12 that are spatially distributed are irradiated on different positions through the second imaging lens 52, to form the left-eye image and the right-eye image that are spatially distributed. When the left eye of an observer observes the left-eye image and the right eye of the observer observes the right-eye image, stereoscopic displaying effect can be achieved.

It can be seen that, in the image generation apparatus 1 having the projection lens 5, a stereoscopic displaying function can be implemented. In addition, the first imaging lens 51 in the projection lens 5 can form the relay image plane 50 on a front side of the light adjustment apparatus 53. In this design, a distance between the light adjustment apparatus 53 and a position at which the imaging light P1 is emitted (digital micromirror device 42) can be shortened, so that the light adjustment apparatus 53 has good beam splitting effect for the imaging light P1, and good stereoscopic displaying effect can be achieved.

In addition, beam splitting of the imaging light P1 on the relay image plane 50 is implemented by using the light adjustment apparatus 53 in the projection lens 5, so that problems such as an image resolution loss, image distortion, and crosstalk between the left-eye image and the right-eye image caused by a diffusion screen can be avoided, to improve stereoscopic displaying effect of the image generation apparatus 1.

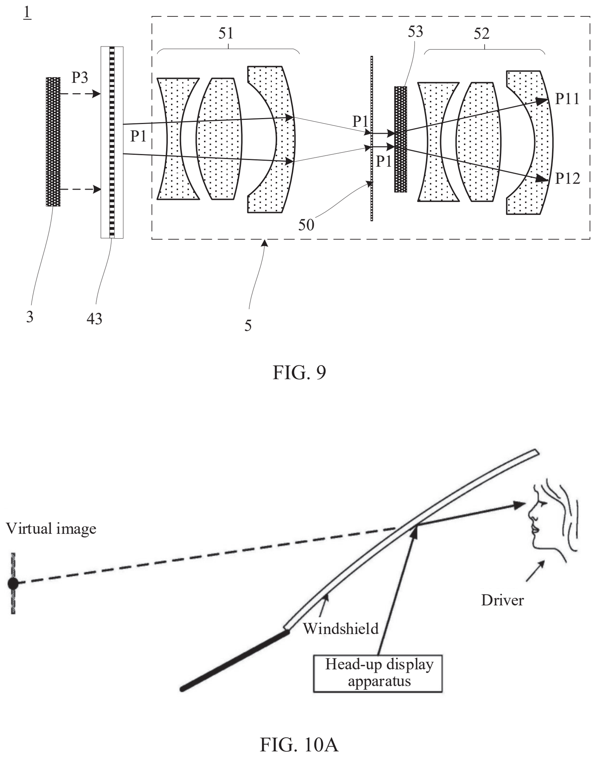

In some embodiments, as shown in FIG. 9, the image generation apparatus 1 includes the image source module 2 and the projection lens 5. The image source module 2 includes the light source 3 and a liquid crystal display 43. The liquid crystal display 43 is of a transmissive liquid crystal structure. The light source 3 is disposed on one side of the liquid crystal display 43. The light adjustment apparatus 53 and the projection lens 5 are disposed on another side of the liquid crystal display 43.

The light source 3 is configured to generate the illumination light beam P3, and the illumination light beam P3 is irradiated on the liquid crystal display 43. The illumination light beam P3 may be natural light (non-polarized light), or may be a mixed light beam (polarized light) of P-polarized light and S-polarized light, or may be polarized light (one of P-polarized light and S-polarized light) applicable to the liquid crystal on silicon 41. For descriptions of the light source 3, refer to the foregoing related content. Details are not described herein again.

In this embodiment, an example in which the illumination light beam P3 generated by the light source 3 is natural light is used to describe the image generation apparatus 1 in this embodiment.

The illumination light beam P3 generated by the light source 3 is irradiated on the liquid crystal display 43. The liquid crystal display 43 includes a first substrate and a second substrate that are disposed opposite to each other, and a liquid crystal layer disposed between an array substrate and an aligned substrate. The liquid crystal display 43 includes a plurality of pixels arranged in an array, a plurality of pixel electrodes are disposed on the array substrate in correspondence to the pixels, and a common electrode is disposed on the array substrate or the aligned substrate. A voltage is applied to the pixel electrode, so that a liquid crystal corresponding to the pixel at the liquid crystal layer can be controlled, to modulate light passing through the pixel.

In this embodiment, after the illumination light beam P3 is incident to the liquid crystal display 43, the liquid crystal display 43 modulates the illumination light beam P3 based on the image data to form the imaging light P1 including the image information. The image data may be the image data for implementing stereoscopic displaying based on the binocular parallax principle, and the image data includes the left-eye image data for forming the left-eye image and the right-eye image data for forming the right-eye image.

Some pixels in the liquid crystal display 43 modulate the illumination light beam P3 based on the left-eye image data, to form the first imaging sub-light P11 including left-eye image information, and some pixels in the liquid crystal display 43 modulate the illumination light beam P3 based on the right-eye image data, to form the second imaging sub-light P12 including right-eye image information. The first imaging sub-light P11 and the second imaging sub-light P12 are mixed together, and are collectively referred to as the imaging light P1.

For example, the plurality of pixels arranged in the array in the liquid crystal display 43 include a plurality of left-eye pixels used to form the first imaging sub-light P11 and a plurality of right-eye pixels used to form the second imaging sub-light P12. A right-eye pixel and a left-eye pixel are disposed adjacently.

The imaging light P1 formed by the liquid crystal display 43 is projected onto the projection lens 5. A first imaging lens 51 in the projection lens 5 is configured to: receive the imaging light P1, and perform imaging on a side that is of a light adjustment apparatus 53 and that is close to the first imaging lens 51, to form a relay image plane 50. One-to-one mapping of pixels in the liquid crystal display 43 may be implemented on the relay image plane 50. The light adjustment apparatus 53 performs beam splitting on the imaging light P1 on the relay image plane 50, and after split, the first imaging sub-light P11 and the second imaging sub-light P12 in the imaging light P1 are projected onto a second imaging lens 52 in different directions, to form the first imaging sub-light P11 and the second imaging sub-light P12 that are spatially distributed. The first imaging sub-light P11 and the second imaging sub-light P12 that are spatially distributed are irradiated on different positions through the second imaging lens 52, to form the left-eye image and the right-eye image that are spatially distributed. When the left eye of an observer observes the left-eye image and the right eye of the observer observes the right-eye image, stereoscopic displaying effect can be achieved.

It can be seen that, in the image generation apparatus 1 having the projection lens 5, a stereoscopic displaying function can be implemented. In addition, the first imaging lens 51 in the projection lens 5 can form the relay image plane 50 on a front side of the light adjustment apparatus 53. In this design, a distance between the light adjustment apparatus 53 and a position at which the imaging light P1 is emitted (liquid crystal display 43) can be shortened, so that the light adjustment apparatus 53 has good beam splitting effect for the imaging light P1, and good stereoscopic displaying effect can be achieved.

In addition, beam splitting of the imaging light P1 on the relay image plane 50 is implemented by using the light adjustment apparatus 53 in the projection lens 5, so that problems such as an image resolution loss, image distortion, and crosstalk between the left-eye image and the right-eye image caused by a diffusion screen can be avoided, to improve stereoscopic displaying effect of the image generation apparatus 1.

The imaging light P1 formed by the liquid crystal display 43 is polarized light. Therefore, in the projection lens 5 used for the image generation apparatus 1, the light adjustment apparatus 53 may be a polarization light adjustment element, or may be a non-polarization light adjustment element.

In the foregoing embodiments, the example in which the imaging light P1 includes the first imaging sub-light P11 and the second imaging sub-light P12 is used to describe the image generation apparatus 1 provided in this embodiment of this application. However, embodiments of this application are not limited thereto.

In some embodiments, the imaging light P1 includes at least two imaging sub-light pairs, each of the imaging sub-light pairs includes a first imaging sub-light P11 and a second imaging sub-light P12, and the first imaging sub-light P11 and the second imaging sub-light P12 in each of the imaging sub-light pairs can form a binocular parallax image for implementing stereoscopic displaying. Each of the imaging sub-light pairs is separately used to form one stereoscopic displaying viewing point.

The light adjustment apparatus 53 may project different imaging sub-light pairs onto the projection lens 5 in different directions, and project first imaging sub-light P11 and second imaging sub-light P12 in a same imaging sub-light pair onto the projection lens 5 in different directions. In this design, a plurality of viewing points that are spatially distributed can be formed. In this way, observers at different positions can simultaneously see the left-eye image and the right-eye image, to implement the stereoscopic displaying function, and expand a stereoscopic displaying viewing angle of the image generation apparatus 1.

The image generation apparatus 1 provided in this embodiment of this application may be used in an audio and video entertainment scenario and an assisted driving scenario. During specific application, the image generation apparatus 1 may be used independently, or may be integrated into another device as a component.

For example, in a possible application scenario, the image generation apparatus in this embodiment of this application is integrated into a head-up display (head-up display, HUD) apparatus. Refer to FIG. 10A. FIG. 10A is described by using an example in which the head-up display apparatus is mounted in a transportation means. The head-up display apparatus may project navigation information, instrument information, and the like onto a driver's front field of view, to prevent the driver from looking down to view the information, so that driving safety is not affected. After an image projected by the head-up display apparatus is reflected by a windshield, a virtual image is formed outside the transportation means. A type of the head-up display apparatus includes but is not limited to a windshield (Windshield, W)-HUD, augmented reality head-up display (AR-HUD), or the like.

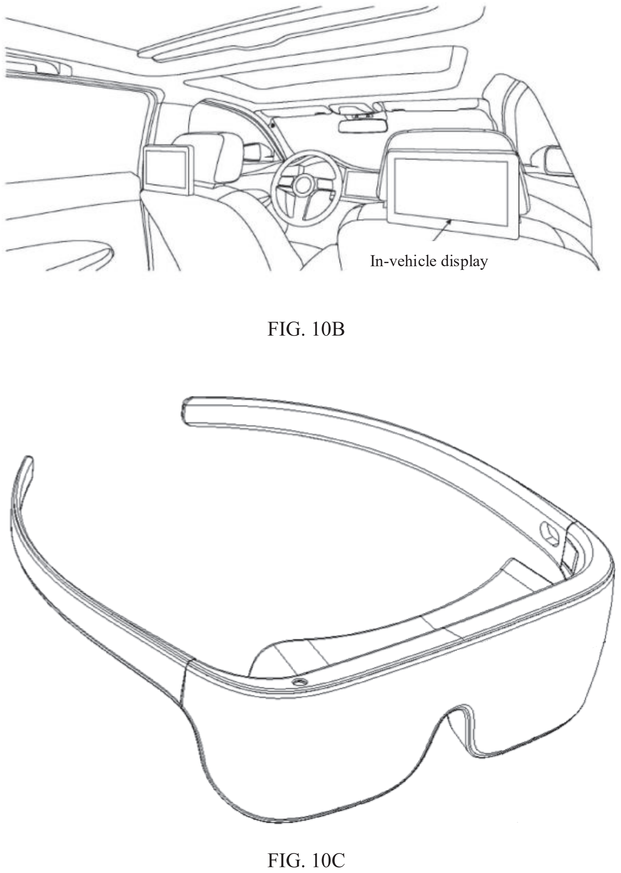

In another possible implementation, the image generation apparatus in this embodiment of this application is integrated into an in-vehicle display. Refer to FIG. 10B. The in-vehicle display may be mounted at the rear of a seat of the transportation means, a front passenger seat, or the like. A position at which the in-vehicle display is mounted is not limited in this application.

In still another possible application scenario, the image generation apparatus in this embodiment of this application is integrated into a near-eye display (Near-Eye Display, NED) device. The NED device may be, for example, an AR device or a VR device. The AR device may include but is not limited to AR glasses or an AR helmet, and the VR device may include but is not limited to VR glasses or a VR helmet. Refer to FIG. 10C. The AR glasses are used as an example. A user may wear an AR glasses device to play a game, watch a video, participate in a virtual conference, perform video shopping, or the like.

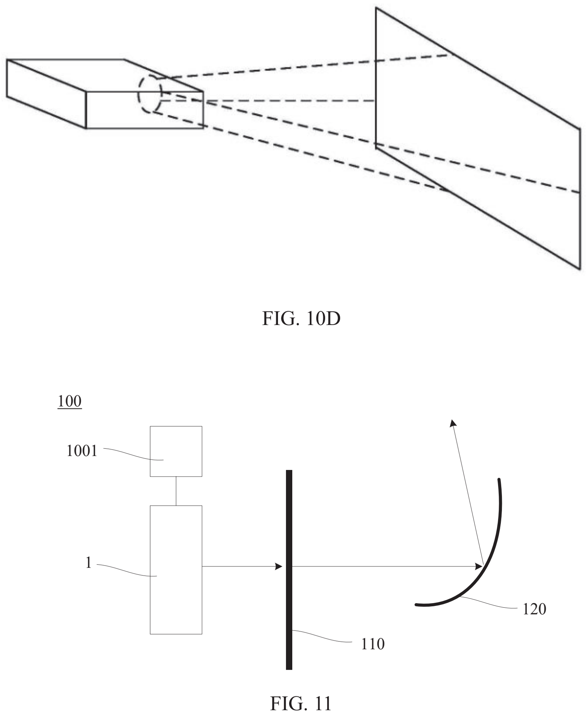

In still another possible application scenario, the image generation apparatus in this embodiment of this application is integrated into a projector. Refer to FIG. 10D. The projector may project an image onto a wall or a projection screen.

The foregoing application scenarios are merely examples. The image generation apparatus 1 provided in this application may be further used in another possible scenario, for example, a medical device. This is not limited in this application.

An embodiment of this application further provides a display device. As shown in FIG. 11, the display device 100 includes a processor 1001 and the image generation apparatus 1 in the foregoing embodiment. The processor 1001 is configured to control the image generation apparatus 1 to form imaging light.

The display device 100 provided in this embodiment of this application may be a head-up display apparatus, an in-vehicle display, a near-eye display device, a projector, a medical device, or the like mentioned in the foregoing application scenarios, or may be a display or the like integrated into a smart household appliance device, or may be a web television, a smart television, or an Internet protocol television (IPTV), or may be integrated into the web television, the smart television, or the Internet protocol television.

In some embodiments, the display device 100 further includes a diffusion screen 110. The diffusion screen 110 is disposed on a light output side of the image generation apparatus 1, and is configured to: receive the imaging light emitted by the image generation apparatus 1 and perform imaging. The first imaging sub-light and the second imaging sub-light may form, on the diffusion screen 110, a stereoscopic displaying viewing point that matches a human eye pupillary distance.

In addition, the diffusion screen 110 may improve uniformity of an imaging picture through scattering effect and a structure of the diffusion screen 110. In addition, the diffusion screen 110 may be configured to perform angle diffusion on the stereoscopic displaying viewing point, to increase a stereoscopic displaying viewing angle.

In this embodiment, the diffusion screen 110 may be a reflective diffusion screen or a transmissive diffusion screen.

In some embodiments, the display device 100 further includes a first reflection element 120. The first reflection element 120 may be disposed behind the diffusion screen 110, and is configured to reflect an imaging pattern on the diffusion screen 110 to a preset position.

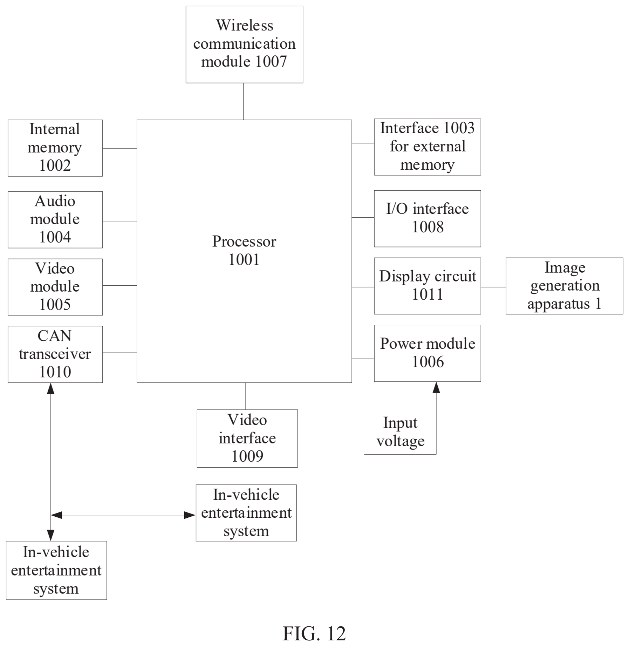

FIG. 12 is a diagram of a display device 100 according to an embodiment of this application.

As shown in FIG. 12, a circuit in the display device 100 mainly includes a processor 1001, an internal memory 1002, an interface 1003 for external memory, an audio module 1004, a video module 1005, a power module 1006, a wireless communication module 1007, an I/O interface 1008, a video interface 1009, a controller area network (Controller Area Network, CAN) transceiver 1010, a display circuit 1011, and any one of the foregoing image generation apparatuses 1. The processor 1001 may be connected to a peripheral element of the processor 1001 through a bus, for example, the internal memory 1002, the interface 1003 for external memory, the audio module 1004, the video module 1005, the power module 1006, the wireless communication module 1007, the I/O interface 1008, the video interface 1009, the CAN transceiver 1010, and the display circuit 1011.

The processor 1001 may be referred to as a front-end processor. The processor 1001 may include one or more processing units. For example, the processor 1001 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

A storage may be further disposed in the processor 1001, and is configured to store instructions and data, for example, store an operating system and an AR Creator software package of the display device 100. In some embodiments, the storage in the processor 1001 is a cache. The storage may store instructions or data just used or cyclically used by the processor 1001. If the processor 1001 needs to use the instructions or the data again, the processor 1001 may directly invoke the instructions or the data from the storage. This avoids repeated access, reduces waiting time of the processor 1001, and improves system efficiency.

In addition, if the display device 100 in this embodiment is mounted on a transportation means, functions of the processor 1001 may be implemented by a domain controller on the transportation means.

In some embodiments, the display device 100 may further include a plurality of input/output (input/output, I/O) interfaces 1008 connected to the processor 1001. The interface 1008 may include but is not limited to an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The I/O interface 1008 may be connected to a device such as a mouse, a touchscreen, a keyboard, a camera, a speaker/horn, a microphone, or the like, or may be connected to a physical button (for example, a volume button, a brightness adjustment button, a power-on/ power-off button, or the like) on the display device 100.

The internal memory 1002 may be configured to store computer-executable program code. The executable program code includes instructions. The internal memory 1002 may include a program storage area and a data storage area. The program storage area may store an operating system, an application required by at least one function (such as a call function, a time setting function, or an AR function), and the like. The data storage area may store data (such as a phone book and world time) created in a process of using the display apparatus, and the like. In addition, the internal memory 1002 may include a high-speed random access memory, or may include a non-volatile memory, for example, at least one magnetic disk storage device, a flash memory, or a universal flash storage (universal flash storage, UFS). The processor 1001 performs various function applications and data processing of the display device 100 by running the instructions stored in the internal memory 1002 and/or the instructions stored in the memory disposed in the processor 1001.

The interface 1003 for external memory may be configured to connect to an external memory (for example, a Micro SD card). The external memory may store data or program instructions as required. The processor 1001 may perform an operation such as reading or writing on the data or the program through the interface 1003 for external memory.

The audio module 1004 is configured to convert digital audio information into an analog audio signal for output, and is also configured to convert analog audio input into a digital audio signal. The audio module 1004 may be further configured to encode and decode an audio signal, for example, perform voice playing or voice recording. In some embodiments, the audio module 1004 may be disposed in the processor 1001, or some function modules in the audio module 1004 are disposed in the processor 1001. The display apparatus may implement an audio function through the audio module 1004, the application processor, and the like.

The video interface 1009 may receive audio and video input externally, and may be specifically a high-definition multimedia interface (high-definition multimedia interface, HDMI), a digital visual interface (digital visual interface, DVI), a video graphics array (video graphics array, VGA), a display port (display port, DP), a low-voltage differential signaling (low-voltage differential signaling, LVDS) interface, or the like. The video interface 1009 may further output a video externally. For example, the display device 100 receives, through the video interface, video data sent by a navigation system or video data sent by a domain controller.

The video module 1005 may decode a video input by the video interface 1009, for example, perform H.264 decoding. The video module may further encode a video collected by the display device 100, for example, perform H.264 encoding on a video collected by an external camera. In addition, the processor 1001 may also decode the video input by the video interface 1009, and then output a decoded image signal to the display circuit 1011.

Further, if the display device 100 in this embodiment is mounted on the transportation means, the display device 100 further includes the CAN transceiver 1010, and the CAN transceiver 1010 may be connected to a CAN bus (CAN BUS) of a vehicle. Through the CAN bus, the display device 100 may communicate with an in-vehicle entertainment system (music, radio, and video modules), a vehicle status system, and the like. For example, a user may enable an in-vehicle music playing function by operating the display device 100. The vehicle status system may send vehicle status information (vehicle door, seat belt, and the like) to the display device 100 for display.

The display circuit 1011 and the image generation apparatus 1 jointly implement a function of displaying an image. The display circuit 1011 receives the image signal output by the processor 1001, processes the image signal, and inputs the processed image signal into the image generation apparatus 1 for imaging. The display circuit 1011 may further control an image displayed by the image generation apparatus 1, for example, control a parameter such as display brightness or contrast. The display circuit 1011 may include a drive circuit, an image control circuit, and the like.

In this embodiment, the video interface 1009 may receive input video data (or referred to as a video source), the video module 1005 performs decoding and/or digitization processing and outputs the image signal to the display circuit 1011, and the display circuit 1011 drives the image generation apparatus 1 to perform imaging based on the input image signal, so as to generate a visual image (emit imaging light).

The power module 1006 is configured to supply power to components such as the processor 1001 and the image generation apparatus 1 based on input power (for example, a direct current). The power module 1006 may include a rechargeable battery. In addition, the power module 1006 may be connected to a power supply module (for example, a power battery) of the vehicle, and the power supply module of the vehicle supplies power to the power module 1006 of the display device 100.

The wireless communication module 1007 may enable the display device 100 to perform wireless communication with the outside, and may provide wireless communication solutions such as a wireless local area network (wireless local area network, WLAN), a wireless fidelity (wireless fidelity, Wi-Fi) network, Bluetooth (Bluetooth, BT), a global navigation satellite system (global navigation satellite system, GNSS), frequency modulation (frequency modulation, FM), a near-distance wireless communication (near-field communication, NFC) technology, and an infrared (infrared, IR) technology. The wireless communication module 1007 may be one or more components integrating at least one communication processing module. The wireless communication module 1007 receives an electromagnetic wave through an antenna, performs frequency modulation and filtering processing on an electromagnetic wave signal, and sends a processed signal to the processor 1001. The wireless communication module 1007 may further receive a to-be-sent signal from the processor 1001, perform frequency modulation and amplification on the signal, and convert the signal into an electromagnetic wave for radiation through the antenna.

In addition, in addition to being input through the video interface 1009, the video data decoded by the video module 1005 may alternatively be received in a wireless manner through the wireless communication module 1007 or read from the internal memory 1002 or the external memory. For example, the display device 100 may receive the video data from a terminal device or the in-vehicle entertainment system through a wireless local area network in the vehicle, and the display device 100 may further read audio and video data stored in the internal memory 1002 or the external memory.

In addition, a circuit schematic in this embodiment of this application does not constitute a specific limitation on the display device 100. In some other embodiments of this application, the display device 100 may include more or fewer components than those shown in the figure, or a combination of some components, or splits from some components, or a different component layout. The components shown in the figure may be implemented by hardware, software, or a combination of software and hardware.

In addition to the foregoing functions, the display device 100 may further provide a function of receiving a television broadcast. For example, the display device 100 may be integrated into a web television, a smart television, or an Internet protocol television (IPTV).

In addition, an embodiment of this application provides a transportation means, and the display device 100 in the foregoing embodiment is mounted on the transportation means. The transportation means further includes a second reflection element, and the second reflection element is configured to reflect, to a preset position, imaging light formed by the display device 100.

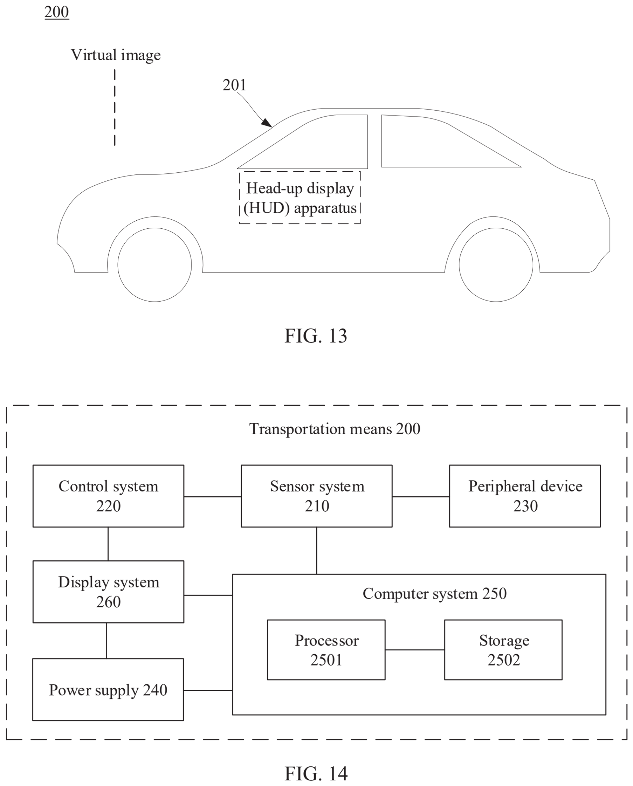

For example, as shown in FIG. 13, when the display device 100 is a head-up display apparatus mounted on the transportation means, the second reflection element may be windshield 201 of the transportation means. The windshield 201 is configured to receive imaging light emitted by the head-up display apparatus. The imaging light includes driving-related image information. The windshield 201 reflects the imaging light to eyes of a driver of the transportation means, so that the driver of the transportation means 200 sees a virtual image of the driving-related image information.

FIG. 14 is a functional diagram of a transportation means 200 according to an embodiment of this application. The transportation means may include various subsystems, for example, a sensor system 210, a control system 220, one or more peripheral devices 230 (one peripheral device is used as an example in the figure), a power supply 240, a computer system 250, and a display system 260 in the figure. The subsystems may communicate with each other. The display system 260 may include the display device 100 provided in an embodiment of this application. The transportation means may further include another function system, for example, an engine system that supplies power to the transportation means, or a cockpit. This is not limited herein in this application.

Specifically, the sensor system 210 may include a plurality of detection apparatuses. The detection apparatuses can sense measured information, and convert the sensed information into an electrical signal or other information in a required form based on a specific rule for output. The detection apparatuses may include a global positioning system (Global Positioning System, GPS), a vehicle speed sensor, an inertial measurement unit (Inertial Measurement Unit, IMU), a radar unit, a laser rangefinder, a camera apparatus, a wheel speed sensor, a steering sensor, a gear sensor, another element used for automatic detection, or the like. This is not limited in this application.

The control system 220 may include a plurality of elements, for example, a steering unit, a brake unit, a lighting system, an autonomous driving system, a map navigation system, a network time system, and an obstacle avoidance system shown in the figure. The control system 220 may receive information (for example, a vehicle speed and an inter-vehicle distance) sent by the sensor system 210, to implement functions such as autonomous driving and map navigation.

In some embodiments, the control system 220 may further include elements such as a throttle controller and an engine controller that are configured to control a traveling speed of a vehicle. This is not limited in this application.

The peripheral device 230 may include a plurality of elements, for example, a communication system, a touchscreen, a user interface, a microphone, and a speaker. The communication system is configured to implement network communication between the transportation means and another device other than the transportation means. During actual application, the communication system may implement network communication between the transportation means and the another device by using a wireless communication technology or a wired communication technology. The wired communication technology may mean that the vehicle communicates with the another device through a network cable, an optical fiber, or the like.

The power supply 240 represents a system used to provide power or energy for the vehicle, and may include but is not limited to a rechargeable lithium battery and a lead-acid battery. During actual application, one or more battery components in the power supply are configured to provide electrical energy or energy for starting the vehicle. A type and a material of the power supply are not limited in this application.

Several functions of the transportation means may be controlled and implemented by the computer system 250. The computer system 250 may include one or more processors 2501 (one processor is shown as an example in the figure) and a storage 2502 (which may also be referred to as a storage apparatus). During actual application, the storage 2502 is inside the computer system 250, or may be outside the computer system 250, for example, may be used as a cache in the transportation means. This is not limited in this application.

The processor 2501 may include one or more general-purpose processors, for example, a graphics processing unit (graphic processing unit, GPU). The processor 2501 may be configured to run a related program stored in the storage 2502 or instructions corresponding to a program, to implement a corresponding function of the vehicle. The processor 2501 may also be referred to as a domain controller.

The storage 2502 may include a volatile memory (volatile memory), for example, a RAM. The memory may alternatively include a non-volatile memory (non-volatile memory), for example, a ROM, a flash memory (flash memory), an HDD, or a solid-state drive SSD. The storage 2502 may alternatively include a combination of the foregoing types of memories. The storage 2502 may be configured to store a set of program code or instructions corresponding to program code, so that the processor 2501 invokes the program code or the instructions stored in the storage 2502 to implement a corresponding function of the vehicle. In this application, the storage 2502 may store a set of program code used for vehicle control. The processor 2501 may control safe driving of the vehicle by invoking the program code. A manner of implementing safe driving of the vehicle is specifically described in detail below in this application.

In some embodiments, in addition to storing the program code or the instructions, the storage 2502 may further store information such as a road map, a driving route, and sensor data. The computer system 250 may implement a vehicle-related function in combination with other elements in the diagram of the functional framework of the vehicle, such as the sensor and the GPS in the sensor system. For example, the computer system 250 may control a traveling direction, a traveling speed, or the like of the transportation means based on data input of the sensor system 210. This is not limited in this application.

The display system 260 may interact with another system in the transportation means. For example, the display system 260 may display navigation information sent by the control system 220, or play multimedia content sent by the computer system 250 and the peripheral device 230. For a specific structure of the display system 260, refer to the foregoing embodiment of the display apparatus. Details are not described herein again.

The four subsystems, to be specific, the sensor system 210, the control system 220, the computer system 250, and the display system 260, shown in this embodiment are merely examples, and do not constitute a limitation. During actual application, the transportation means may combine several elements in the vehicle based on different functions, to obtain subsystems with corresponding different functions. During actual application, the transportation means may include more or fewer subsystems or elements. This is not limited in this application.

The transportation means in embodiments of this application may be a known transportation means like a vehicle, an airplane, a ship, or a rocket, or may be a new transportation means that is to emerge in the future. The vehicle may be an electric vehicle, a fuel vehicle, or a hybrid power vehicle, for example, a pure electric vehicle, a range-extended electric vehicle, a hybrid electric vehicle, a fuel cell vehicle, or a new energy vehicle. This is not specifically limited in this application.

Technical effects that can be achieved by the display device and the transportation means provided in embodiments of this application are the same as technical effects that can be achieved by the image generation apparatus 1 in any one of the foregoing embodiments. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A projection lens, comprising:
a first imaging lens, a light adjustment apparatus, and a second imaging lens, wherein
the first imaging lens is configured to: receive imaging light, and perform imaging on the imaging light on a side that is of the light adjustment apparatus and that is close to the first imaging lens, to form a relay image plane, wherein the imaging light comprises first imaging sub-light and second imaging sub-light, and the first imaging sub-light and the second imaging sub-light are respectively used to form a left-eye image and a right-eye image for implementing stereoscopic display;
the light adjustment apparatus is configured to split the imaging light on the relay image plane, wherein after split, the first imaging sub-light and the second imaging sub-light in the imaging light are projected onto the second imaging lens in different directions; and
the second imaging lens is configured to project the first imaging sub-light and the second imaging sub-light.

2. The projection lens according to claim 1, wherein the imaging light is non-polarized light, and the light adjustment apparatus comprises at least one of a slit grating, a micro lens array, and a cylindrical lens array.

3. The projection lens according to claim 1, wherein the imaging light is polarized light, and the light adjustment apparatus comprises at least one of a slit grating, a micro lens array, a cylindrical lens array, and a polarization light adjustment element.

4. The projection lens according to claim 3, wherein the polarization light adjustment element comprises at least one of a polarization grating and a polarization lens.

5. The projection lens according to any one of claims 1 to 4, wherein the projection lens comprises two second imaging lenses, and the two second imaging lenses are respectively configured to project the first imaging sub-light and the second imaging sub-light.

6. The projection lens according to any one of claims 1 to 5, wherein an image formed by the first imaging lens of the imaging light on the relay image plane is an enlarged real image.

7. The projection lens according to any one of claims 1 to 6, wherein the imaging light comprises at least two imaging sub-light pairs, each of the imaging sub-light pairs comprises the first imaging sub-light and the second imaging sub-light, and each of the imaging sub-light pairs is separately used to form one stereoscopic displaying viewing point; and
the light adjustment apparatus is configured to: project different imaging sub-light pairs onto the second imaging lens in different directions, and project first imaging sub-light and second imaging sub-light in a same imaging sub-light pair onto the second imaging lens in different directions.

8. An image generation apparatus, comprising an image source module and the projection lens according to any one of claims 1 to 7, wherein
the image source module is configured to: form imaging light that comprises image information, and project the imaging light onto the projection lens.

9. The image generation apparatus according to claim 8, wherein the image source module comprises a light source, a liquid crystal on silicon, and a polarizing beam splitter;
the light source is configured to provide an illumination light beam projected onto the polarizing beam splitter;
the polarizing beam splitter is configured to: perform polarization splitting on the illumination light beam to form a first light beam, and project the first light beam onto the liquid crystal on silicon, wherein a polarization direction of the first light beam is a first polarization direction; and
the liquid crystal on silicon is configured to: form the imaging light, and project the imaging light onto the polarizing beam splitter, to project the imaging light onto the projection lens through the polarizing beam splitter, wherein a polarization direction of the imaging light is a second polarization direction, and the first polarization direction and the second polarization direction are perpendicular to each other.

10. The image generation apparatus according to claim 8, wherein the image source module comprises a light source, a digital micromirror device, and a total internal reflection prism;
the light source is configured to provide an illumination light beam projected onto the total internal reflection prism;
the total internal reflection prism is configured to: reflect the illumination light beam to form a first light beam projected onto the digital micromirror device; and transmit the imaging light formed by the digital micromirror device; and
the digital micromirror device is configured to: modulate the first light beam based on image data to form the imaging light, and project the imaging light onto the projection lens through the total internal reflection prism.

11. The image generation apparatus according to claim 8, wherein the image source module comprises a light source and a liquid crystal display;
the light source is configured to provide an illumination light beam projected onto the liquid crystal display; and
the liquid crystal display is configured to: modulate the illumination light beam based on image data to form the imaging light, and project the imaging light onto the projection lens.

12. A display device, comprising a processor and the image generation apparatus according to any one of claims 8 to 11, wherein the processor is configured to control the image generation apparatus to form imaging light.

13. The display device according to claim 12, wherein the display device further comprises a diffusion screen and a first reflection element;
the diffusion screen is disposed on a light output side of the image generation apparatus, and is configured to: receive the imaging light emitted by the image generation apparatus, and perform imaging; and
the first reflection element is configured to reflect imaging information on the diffusion screen to a preset position.

14. A transportation means, comprising the display device according to claim 12 or 13, wherein the display device is mounted on the transportation means.

15. The transportation means according to claim 14, wherein the transportation means further comprises a second reflection element, the display device is configured to project imaging light onto the second reflection element, and the second reflection element is configured to reflect the imaging light.
